# EUROPEAN PATENT APPLICATION

(11) **EP 4 445 866 A1**
(43) Date of publication of application: **16.10.2024**
(21) Application number: 23167868.1
(22) Date of filing: 13.04.2023
(51) Int. Cl.: A61C 13/00, A61C 8/00

(54) **DENTAL PROSTHESIS**

(71) Applicant: Fina, Raffaele, 1004 Lausanne (CH)
(72) Inventor: Fina, Raffaele, 1004 Lausanne (CH)
(74) Representative: reuteler & cie SA

(57) **Abstract**

Dental prosthesis (1) comprising a plurality of crowns (11) fixed to a frame (10) and a plurality of dental implants (2) each comprising a support structure (4) for supporting the frame (10) on a surface portion (9) of a jaw bone (3) of a patient, at least one implant screw (5) for fixing the support structure (4) to the jaw bone (3) and a mounting element (6) for mounting the frame (10) to the support structure (4), wherein the plurality of dental implants (2) is configured to transfer a force from each of the mounting elements (6) in apical direction z- via the support structure (4) onto the surface portion (9) of the jaw bone (3).

## Description

The present invention relates to a dental prosthesis supported by a dental implant, in particular a full dental prosthesis supported by a plurality of dental implants. A full dental prosthesis replaces all the teeth of at least one jaw by artificial teeth.

An endosteal implant is an often-used dental implant consisting of a titanium screw surgically placed within the mandible or maxilla (lower or upper jaw). Dental bone grafting prior to the placement of the implant screw is necessary if the bone quality is insufficient. In this type of dental implants, the biting force is transferred from the crowns to the jaw bone via the implants, i.e., these implants are artificial tooth roots. One of the risks of these dental implants is loosening during use. Another risk is a fracture of the jaw bone during installation or use. For example, these risks are increased if the implant screw is placed into a dental alveolus ("tooth socket") with a large diameter, which requires an implant screw with a large diameter.

A subperiosteal implant is an alternative for an endosteal implant in case of insufficient bone quality. A subperiosteal implant comprises a metal implant framework resting directly on top of the bone, underlying the periosteum, and provides attachment posts, which extend through the gingival tissue for prosthesis anchorage.

For a partial dental prosthesis as well as for a full dental prosthesis, it is important that each crown of the dental prosthesis is precisely positioned such that it fits a crown of the opposite jaw. A mispositioning of the crowns of a dental prosthesis can put a high stress on the implants during normal use, which can lead to the loss of the implants. Moreover, the height of the dental prosthesis needs to be corrected if the patient's bone recedes.

Some dental prostheses are fixed to implants and/or natural teeth and cannot be easily and quickly removed. These dental prostheses are typically difficult to clean, in particular between the dental prostheses and the gingiva.

In view of the foregoing, it is an object of the invention to provide a dental prosthesis suitable for patients with a low bone quality of the jaws.

It is advantageous to provide a dental prosthesis which has a long lifetime.

It is advantageous to provide a dental prosthesis with a simple and fast mounting process.

It is advantageous to provide a dental prosthesis which can be easily maintained and repaired.

It is advantageous to provide a dental prosthesis with a precise positioning of the crowns.

It is advantageous to provide a dental prosthesis with a precise height of the crowns.

It is advantageous to provide a dental prosthesis which can be conveniently cleaned.

Objects of the invention have been achieved by providing a dental prosthesis according to claim 1 and by providing a method for manufacturing a dental prosthesis according to claim 15.

Dependent claims set out various advantageous features of embodiments of the invention.

Disclosed herein is a dental prosthesis comprising a plurality of crowns fixed to a frame and a plurality of dental implants each comprising a support structure for supporting the frame on a surface portion of a jaw bone of a patient, at least one implant screw for fixing the support structure to the jaw bone and a mounting element for mounting the frame to the support structure, wherein the plurality of dental implants is configured to transfer a force from each of the mounting elements in apical direction z- via the support structure onto the surface portion of the jaw bone.

In an advantageous embodiment, each support structure comprises a central portion and lateral portions extending from the central portion in apical direction z-, wherein the mounting element extends from the central portion in coronal direction z+ and wherein the central portion is configured to rest on the jaw bone and the lateral portions are configured to embrace a portion of the jaw bone.

In an advantageous embodiment, each support structure comprises a contact surface configured to conform with the surface portion of the jaw bone.

In an advantageous embodiment, each of the support structures has a length I along a ridge of the jaw bone of at least 10 mm, in particular at least 20 mm.

In an advantageous embodiment, each of the support structures has a height h along an axis z of the plurality of crowns of at least 5 mm, preferably at least 10 mm.

In an advantageous embodiment, the mounting element of each support structure is a screw or a threaded rod with an internal or external thread.

In an advantageous embodiment, the frame comprises matching mounting elements configured to cooperate with the mounting elements of the support structures for mounting the frame to the support structures.

In an advantageous embodiment, the mounting element of each support structure is a screw or a threaded rod with an external thread and each of the matching mounting elements of the frame is a crown with an internal thread.

In an advantageous embodiment, each of the plurality of crowns comprises an internal thread and is removably fixed to the frame by a screw.

In an advantageous embodiment, the dental prosthesis comprises spacers placed between the support structures and the frame, wherein the mounting elements pass through holes in the spacers.

In an advantageous embodiment, the hole in each spacer is a conical hole configured to conform with a conical portion formed on each mounting element or with a conical portion of an extension screw or with a conical portion of a conical element mounted on each mounting element.

In an advantageous embodiment, the frame comprises a plane surface and each spacer comprises a plane surface configured to abut the plane surface of the frame.

In an advantageous embodiment, the dental prosthesis comprises a cleaning system comprising at least one tube or at least one channel formed in the frame extending along the frame perpendicular to an axis z of the mounting elements from a first end of the frame to a second end of the frame, the at least one tube or the at least one channel formed in the frame comprising an inlet and a plurality of nozzles.

In an advantageous embodiment, the at least one tube is held by the spacers.

Also disclosed herein is a method for manufacturing a dental prosthesis comprising the steps of
- generating a three-dimensional model of a surface portion of a jaw bone of a patient; and
- forming the support structure with a contact surface conforming with the surface portion of the jaw bone.

Further advantageous features of the invention will be apparent from the following detailed description of embodiments of the invention and the accompanying illustrations.

### Brief description of the figures

Figure 1a-d are exploded views of a dental prosthesis according to an embodiment of the invention from different perspectives;
Figure 2a is cross-sectional view of a dental prosthesis according to an embodiment of the invention through the mounting element;
Figure 2b is an exploded cross-sectional view of a dental prosthesis according to the embodiment of the invention of figure 2a;

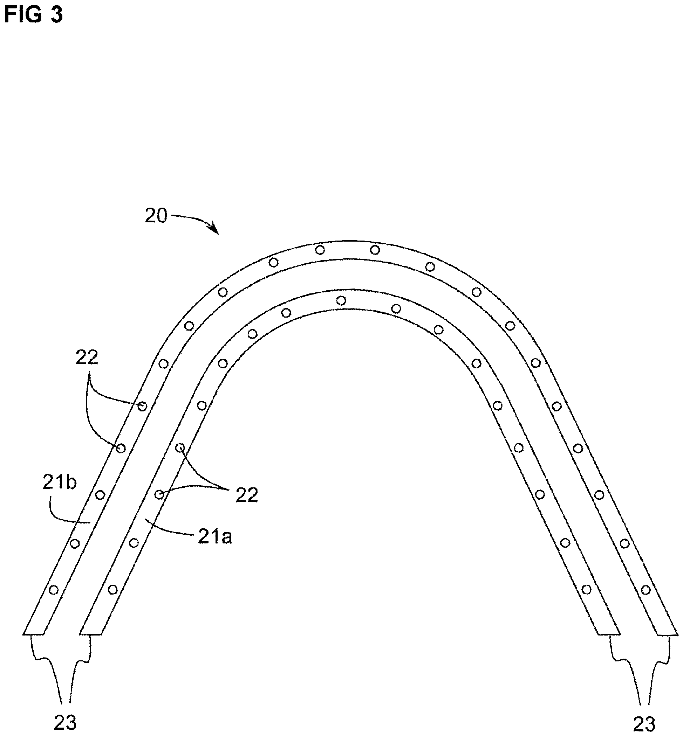

Figure 3 is a schematic view of a cleaning system of a dental prosthesis according to an embodiment of the invention;

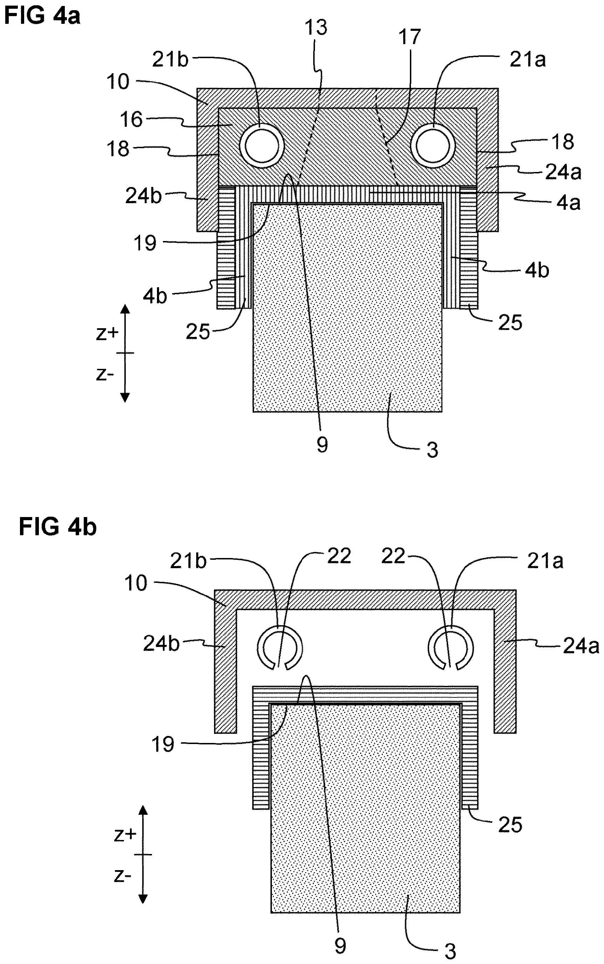

Figures 4a and 4b are cross-sectional views of a portion of a dental prosthesis with a cleaning system according to an embodiment of the invention in front of a spacer and through nozzles of the cleaning system, respectively.

Referring to the figures, a dental prosthesis according to embodiments of the invention comprises a plurality of crowns 11 fixed to a frame 10 and a plurality of dental implants 2 each comprising a support structure 4 for supporting the frame 10 on a surface portion 9 of a jaw bone 3 of a patient, at least one implant screw 5 for fixing the support structure 4 to the jaw bone 3 and a mounting element 6 for mounting the frame 10 to the support structure 4, wherein the plurality of dental implants 2 is configured to transfer a force from each of the mounting elements 6 in apical direction z- via the support structure 4 onto the surface portion 9 of the jaw bone 3.

The axes z of the crowns 11 and the mounting elements 6 are parallel to each other and aligned to the coronal direction z+ or the apical direction z-.

Each support structure 4 comprises a central portion 4a and lateral portions 4b extending from the central portion 4a in apical direction z-, wherein the mounting element 6 extends from the central portion 4a in coronal direction z+ and wherein the central portion 4a is configured to rest on the jaw bone 3 and the lateral portions 4b are configured to embrace a portion of the jaw bone 3.

In a preferred embodiment, each support structure 4 comprises a contact surface 19 configured to conform with the surface portion 9 of the jaw bone 3. Thus, the biting force is transferred via the contact surface 19 of the support structure 4 onto the surface portion 9 of the jaw bone 3.

The support structure 4 may be manufactured by generating a three-dimensional model of a surface portion 9 of a jaw bone 3 of a patient and subsequently forming the support structure 4 with a contact surface 19 conforming with the surface portion 9 of the jaw bone 3. For example, a three-dimensional model of a surface portion 9 of a jaw bone 3 may be obtained by X-ray computed tomography and the support structure 4 with the contact surface 19 may be formed using computer-aided manufacturing based on the three-dimensional model.

In a preferred embodiment, the dental implant 2 is a subperiosteal implant, i.e., the support structure 4 is configured to be partially implanted on the surface of the bone underneath the periosteum. For simplicity, the periosteum is not shown in the figures.

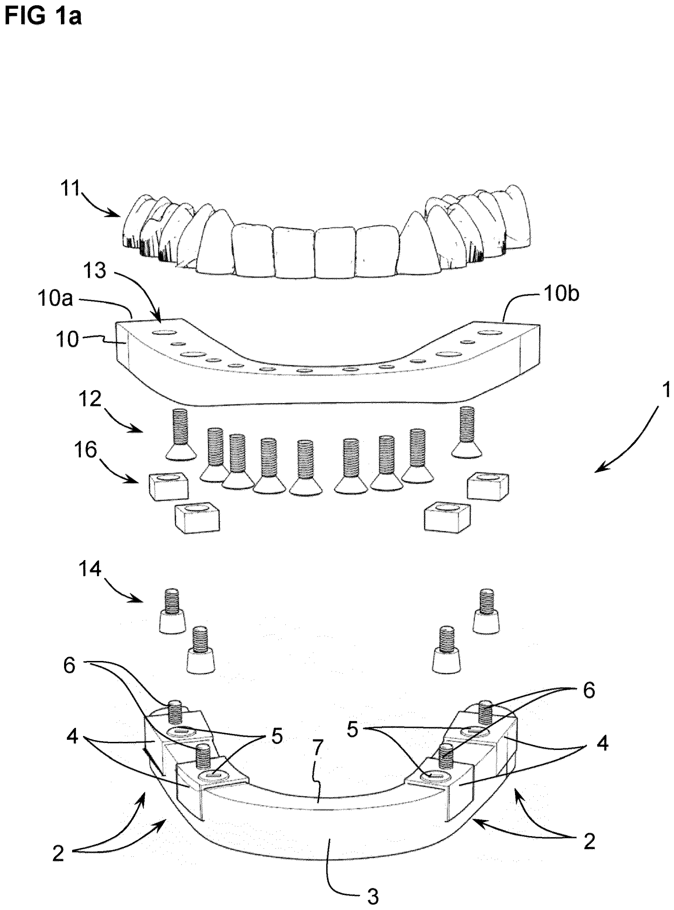

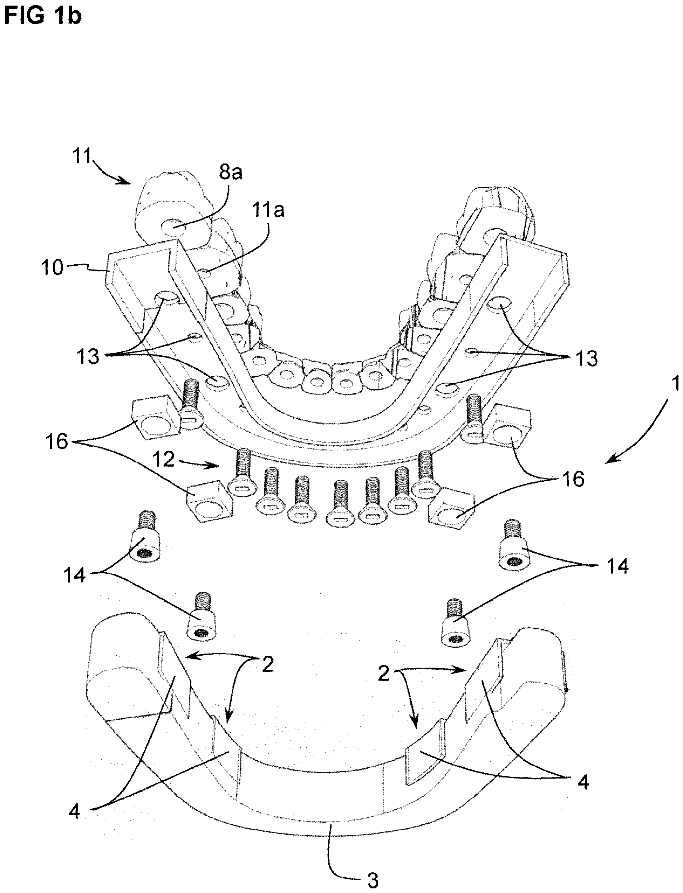

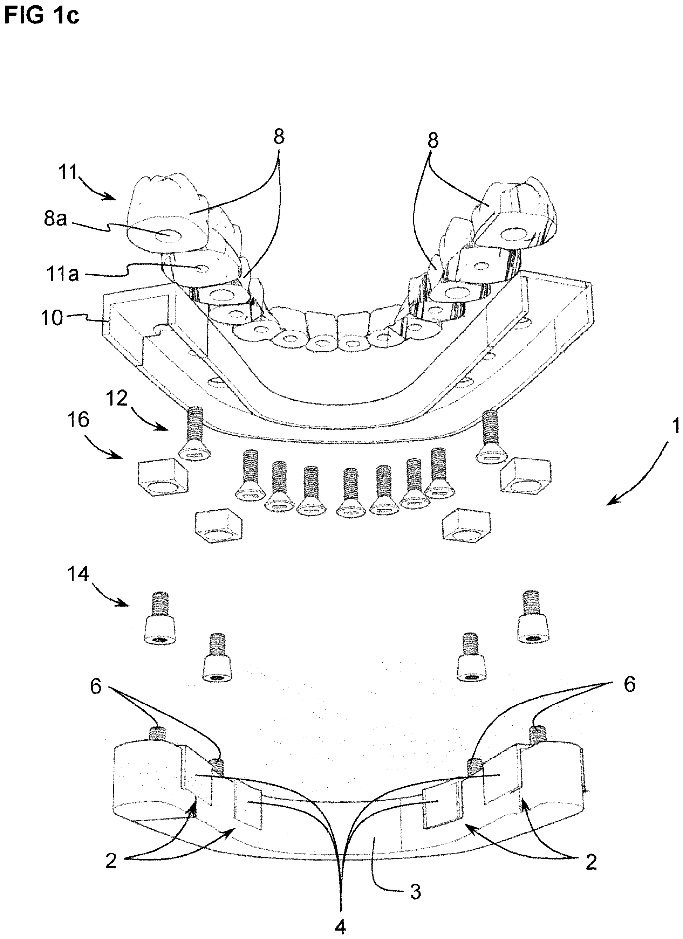

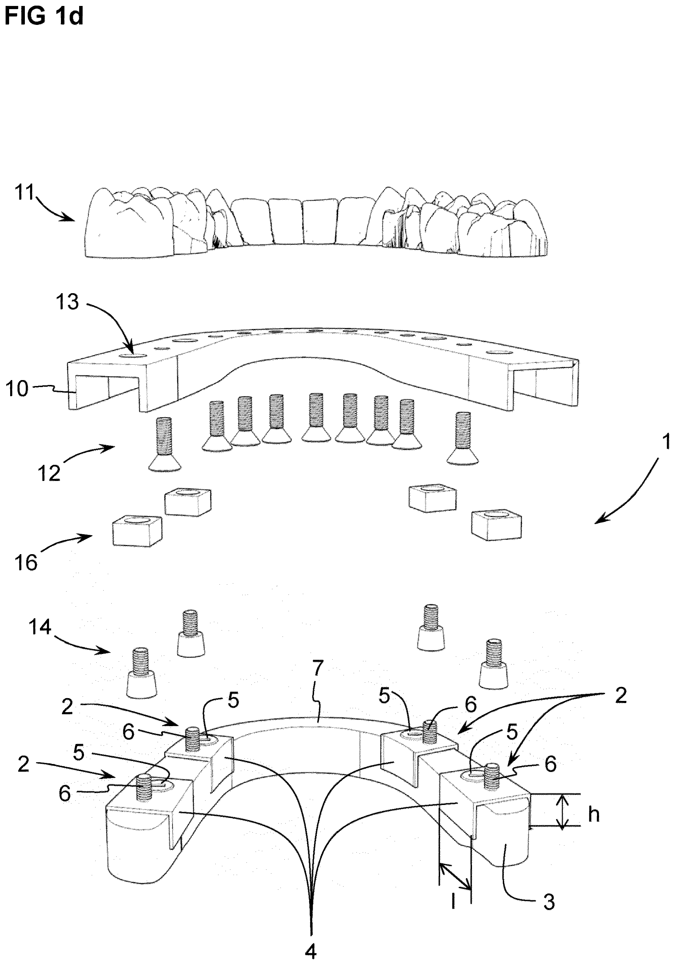

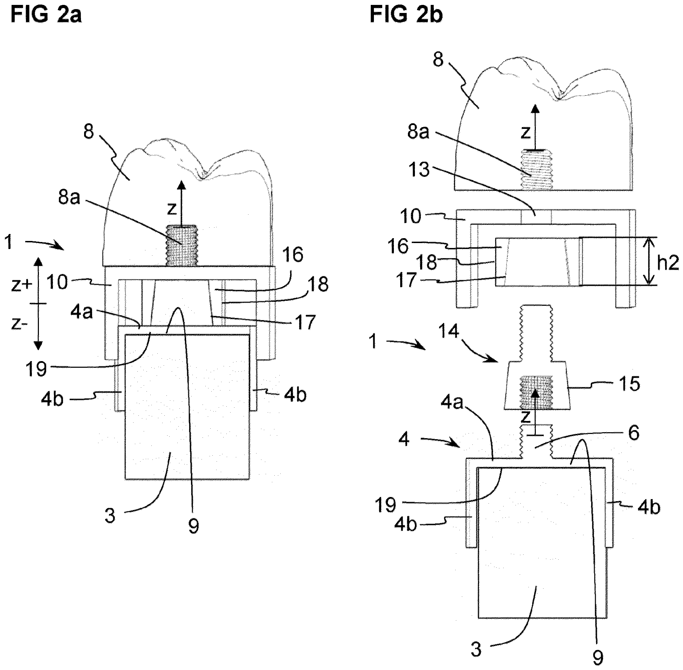

The support structure 4 is intended to be partially embedded in the gingiva 25. For example, at least the lateral portions 4b of the support structure 4 are intended to be embedded in the gingiva 25. For simplicity, the gingiva 25 is not shown in figures 1 and 2.

Preferably, each of the support structures 4 has a length I along a ridge 7 of the jaw bone 3 perpendicular to the axis z of the mounting element 6 of at least 10 mm, in particular at least 20 mm. The support structures 4 may have different lengths. For example, two support structures 4 may have a length of 12 mm and two support structures 4 may have a length of 22 mm. Longer support structures 4 may be fixed with a larger number of implant screws 5 in the jaw bone 3. For example, shorter support structures 4 are fixed with one implant screw and longer support structures 4 are fixed with two implant screws in the jaw bone.

In a preferred embodiment, the at least one implant screw 5 has a diameter between 2 and 3 mm. The at least one implant screw 5 can be placed anywhere in the jaw bone and does not need to be placed into a dental alveolus. For example, the at least one implant screw 5 is intended to be placed between two dental alveoli.

Preferably, each of the support structures 4 has a height h along the axis z of the mounting element 6 of at least 5 mm, preferably at least 10 mm.

The mounting element 6 of each support structure 4 is a threaded rod with an external thread integrally formed with the support structure 4 in the illustrated embodiments. In alternative embodiments of the invention, the mounting element of each support structure 4 is a screw or a threaded rod with an internal thread.

The frame 10 comprises matching mounting elements 8 configured to cooperate with the mounting elements 6 of the support structures 4 for mounting the frame 10 to the support structures 4. In the illustrated embodiments, each of the matching mounting elements 8 of the frame is a crown with an internal thread 8a.

In alternative embodiments of the invention, each of the matching mounting elements may be a screw engaging with the internal thread of a threaded rod of a mounting element.

The frame 10 comprises through holes 13 for fixing the crowns 11 to the frame 10 and for mounting the frame 10 to the support structures 4. The mounting elements 6 of the support structures 4 pass through some of the through holes 13, which may have a larger diameter than the diameter of the mounting elements 6. For example, the diameter of the through holes 13 for the mounting elements 6 may be at least 1 mm or at least 2 mm larger than the diameter of the mounting elements 6. Thus, the position and orientation of the frame 10 may be adjusted in the plane perpendicular to the axes z of the crowns with respect to the positions of the support structures 4.

In a preferred embodiment, each of the support structures 4 and the at least one implant screw 5 are made of titanium.

In the illustrated embodiments, each of the plurality of crowns 11 comprises an internal thread 11a and is removably fixed to the frame 10 by a screw 12 passing through a through hole 13 in the frame 10. The through holes 13 for fixing the crowns 11 may have a larger diameter than the diameter of the screws 12 such that the position of the crowns may be adjusted in a plane perpendicular to the axes z of the crowns 11. For example, the diameter of the through holes 13 for fixing the crowns 11 may be at least 1 mm or at least 2 mm larger than the diameter of the screws 12. Moreover, the orientation of the crowns 11 may be adjusted by a rotation of the crowns 12 about their axes z. One or more crowns 11 can be separately replaced when damaged.

In the illustrated embodiments, the dental prosthesis comprises spacers 16 placed between the support structures 4 and the frame 10, wherein the mounting elements 6 pass through holes 17 in the spacers 16. The spacers 16 may have different heights h2 to account for different distances between the support structures 4 and the frame 10 and correctly position the frame in the direction of the axes z of the crowns 11. Each spacer 16 may comprise a first plane surface configured to abut a plane surface of the frame 10 perpendicular to the axes z of the crowns 11. Each spacer 16 may comprise a second plane surface configured to abut a plane surface of the central portion 4a of the support structure 4.

In the illustrated embodiments, the hole in each spacer 16 is a conical hole 17 configured to conform with a conical portion 15 of an extension screw 14 mounted on each mounting element 6. In alternative embodiments of the invention, the hole in each spacer 16 is a conical hole 17 configured to conform with a conical portion formed on each mounting element 6 or with a conical portion of a conical element mounted on each mounting element 6. The conical element mounted on each mounting element 6 may further comprise a cylindrical portion arranged at an end towards the mounting element 6. The conical portions 15 and conical holes 17 may have an opening angle of 30°.

In alternative embodiments, the position and orientation of the frame 10 with respect to the positions of the support structures 4 are not adjustable and/or the positions of the crowns 11 with respect to the frame 10 are not adjustable. For instance, the frame 10 comprises a lingual side wall 24a and a facial side wall 24b extending in the direction of the axes z of the crowns 11 towards the support structures 4 and lateral surfaces 18 of the spacers 16 are configured to abut the lingual side wall 24a and the facial side wall 24b.

According to illustrated embodiments of the invention, the dental prosthesis comprises a cleaning system 20 comprising at least one tube 21a, 21b extending along the frame 10 in a plane perpendicular to the axes z of the crowns 11 from a first end 10a of the frame 10 to a second end 10b of the frame 10, the at least one tube 21a, 21b comprising an inlet 23 and a plurality of nozzles 22. The at least one tube 21a, 21b may be held by the spacers 16. For example, the at least one tube 21a, 21b may pass through holes in the spacers 16. The at least one tube 21a, 21b may have an outer diameter of 2 mm and may be made of a plastic such as nylon or by a metal such as steel.

Preferably, each of the at least one tube 21a, 21b has at least ten nozzles 22. At least a part of the nozzles 22 is directed towards the the gingiva 25 of the patient (i.e., essentially oriented in apical direction z-) for cleaning the gingiva 25 of the patient while the dental prosthesis 1 is installed in the mouth of the patient. A part of the nozzles 22 may be oriented in one or more directions different from the apical direction z- and configured to clean a portion of the surface of the frame 10 facing the gingiva 25. The cleaning system 20 facilitates a self-dependent cleaning of the dental prosthesis 1 by the patient.

The inlet(s) 23 of the at least one tube 21a, 21b may be positioned at the first end 10a of the frame 10 or the second end 10b of the frame 10. The inlet(s) 23 of the at least one tube 21a, 21b are intended to be connected to a source of a fluid, such as a pressurized gas, in particular pressurized air or a liquid, in particular water or a dental cleaning fluid. The cleaning system 20 may comprise a connector (not shown in the figures) for connecting the source of the fluid to the inlet(s) of the at least one tube 21a, 21b.

In a preferred embodiment, the at least one tube comprises an inner tube 21a and an outer tube 21b. The inner tube 21a and the outer tube 21b are essentially parallel to each other. The inner tube 21a is positioned adjacent the lingual side wall 24a of the frame 10. The outer tube 21b is positioned adjacent the facial side wall 24b of the frame 10.

In an alternative embodiment, the dental prosthesis comprises a cleaning system 20 comprising at least one channel formed in the frame 10. The at least one channel extends along the frame 10 perpendicular to the axes z of the crowns 11 from a first end 10a of the frame 10 to a second end 10b of the frame 10. Each of the at least one channel comprises an inlet 23 and a plurality of nozzles 22.

In the illustrated embodiments, the dental prosthesis is a full dental prosthesis. In alternative embodiments, the dental prosthesis is a partial dental prosthesis comprising a single dental implant or a plurality of dental implants.

### List of references

Dental prosthesis 1
   Dental implant 2
      Support structure 4
         Central portion 4a
         Lateral portions 4b
         Contact surface 19
         Length l
         Height h
      Implant screw 5
      Mounting element 6
   Frame 10
      Crown 11
         Screw 12
         Internal thread 11a
      Matching mounting element 8
         Internal thread 8a
      Positioning elements
         Through hole 13
         Extension screw 14 Conical portion 15
         Spacer 16
            Conical hole 17
            Lateral surfaces 18
            Height h2
      Side wall 24a, 24b
   Cleaning system 20
      Tube 21a, 21b
      Nozzle 22
      Inlet 23
Jaw bone 3
   Ridge 7
   Surface portion 9
Gingiva 25

## Claims

1. Dental prosthesis (1) comprising a plurality of crowns (11) fixed to a frame (10) and a plurality of dental implants (2) each comprising a support structure (4) for supporting the frame (10) on a surface portion (9) of a jaw bone (3) of a patient, at least one implant screw (5) for fixing the support structure (4) to the jaw bone (3) and a mounting element (6) for mounting the frame (10) to the support structure (4), wherein the plurality of dental implants (2) is configured to transfer a force from each of the mounting elements (6) in apical direction z- via the support structure (4) onto the surface portion (9) of the jaw bone (3).

2. Dental prosthesis (1) according to claim 1, wherein each support structure (4) comprises a central portion (4a) and lateral portions (4b) extending from the central portion (4a) in apical direction z-, wherein the mounting element (6) extends from the central portion (4a) in coronal direction z+ and wherein the central portion (4a) is configured to rest on the jaw bone (3) and the lateral portions (4b) are configured to embrace a portion of the jaw bone (3).

3. Dental prosthesis (1) according to any preceding claim, wherein each support structure (4) comprises a contact surface (19) configured to conform with the surface portion (9) of the jaw bone (3).

4. Dental prosthesis (1) according to any preceding claim, wherein each of the support structures (4) has a length I along a ridge (7) of the jaw bone (3) of at least 10 mm, in particular at least 20 mm.

5. Dental prosthesis (1) according to any preceding claim, wherein each of the support structures (4) has a height h along an axis z of the plurality of crowns (11) of at least 5 mm, preferably at least 10 mm.

6. Dental prosthesis (1) according to any preceding claim, wherein the mounting element (6) of each support structure (4) is a screw or a threaded rod with an internal or external thread.

7. Dental prosthesis (1) according to the directly preceding claim, wherein the frame (10) comprises matching mounting elements (8) configured to cooperate with the mounting elements (6) of the support structures (4) for mounting the frame (10) to the support structures (4).

8. Dental prosthesis (1) according to the directly preceding claim, wherein the mounting element (6) of each support structure (4) is a screw or a threaded rod with an external thread and each of the matching mounting elements (8) of the frame is a crown with an internal thread (8a).

9. Dental prosthesis (1) according to any preceding claim, wherein each of the plurality of crowns (11) comprises an internal thread (11a) and is removably fixed to the frame (10) by a screw (12).

10. Dental prosthesis (1) according to any preceding claim, comprising spacers (16) placed between the support structures (4) and the frame (10), wherein the mounting elements (6) pass through holes (17) in the spacers (16).

11. Dental prosthesis (1) according to the directly preceding claim, wherein the hole in each spacer (16) is a conical hole (17) configured to conform with a conical portion formed on each mounting element (6) or with a conical portion (15) of an extension screw (14) or with a conical portion of a conical element mounted on each mounting element (6).

12. Dental prosthesis (1) according to any one of the two directly preceding claims, wherein the frame (10) comprises a plane surface and each spacer (16) comprises a plane surface configured to abut the plane surface of the frame (10).

13. Dental prosthesis (1) according to any preceding claim, comprising a cleaning system (20) comprising at least one tube (21a, 21b) or at least one channel formed in the frame (10) extending along the frame (10) perpendicular to an axis z of the mounting elements (6) from a first end of the frame (10) to a second end of the frame (10), the at least one tube (21a, 21b) or the at least one channel formed in the frame (10) comprising an inlet (23) and a plurality of nozzles (22).

14. Dental prosthesis (1) according to the directly preceding claim, wherein the at least one tube (21a, 21b) is held by the spacers (16).

15. Method for manufacturing a dental prosthesis (1) according to any preceding claim, comprising the steps of
- generating a three-dimensional model of a surface portion (9) of a jaw bone (3) of a patient; and
- forming the support structure (4) with a contact surface (19) conforming with the surface portion (9) of the jaw bone (3).
